# EUROPEAN PATENT APPLICATION

(11) **EP 1 228 700 A1**
(43) Date of publication of application: **07.08.2002**
(21) Application number: 01200313.3
(22) Date of filing: 29.01.2001
(51) Int. Cl.: A23L 1/0522, A23L 1/09, C08B 30/12, C08B 30/14, C08B 31/00, A23P 1/08, A21D 10/04, A21D 13/06, A21D 13/08, A21D 2/18, A21D 2/26

(54) **Food coating**

(71) Applicant: Coöperative Verkoop- en Productievereniging, van Aardappelmeel en Derivaten Avebe B.A., 9641 JA Veedam (NL)
(72) Inventor: The designation of the inventor has not yet been filed
(74) Representative: Prins, Adrianus Willem

(57) **Abstract**

The present invention pertains to the use of a degraded and crosslinked starch in a food coating or batter composition for food products. Surprisingly, it has been found that by virtue of the use of this specific starch, the textural properties and in particular the crispiness of a coating on a food product are significantly improved.

## Description

The present invention relates to a food coating or a batter based on starch and to a method for the preparation thereof. The invention also relates to the use of said starch based food coating in improving textural characteristics of the coated food product.

A wide variety of food products are on the market that have a coating or batter applied to them. They include poultry, meat, seafood, vegetables, cheese and snacks. In the past the composition of coatings and batters of ready-to-prepare food items has gained much attention. A high demand for convenience combined with a need for traditional bite, crispiness and other textural attributes has led to a wide variety of inventions relating to frozen French fries, frozen fish, meat and poultry, and frozen vegetables. Upon frying, baking or cooking, these products should regain a fresh appearance and tender crispy taste. Another reason for coating or battering foods is that it makes products larger and less expensive, because the batter is usually cheaper than the product itself.

A further demand on coated food derives from the fast food area. In the fast food area products are prepared in advance and kept warm using an infrared lamp or an oven. If the product is not sold within a certain time frame the product or the coating becomes soggy and unattractive and must be discarded. The application of a coating can prolong the holding time and therefor save costs for the fast food caterer.

Applying a coating or batter to a certain food item has previously been disclosed. US patent 5,141,759 describes a method of applying a starch based coating to frozen French fries. The coating consists of ungelatinized potato starch, ungelatinized modified corn starch, rice flour, and other minor ingredients (salt, baking soda, etc.). US patent 5,760,168 describes a coating consisting of cross-linked tapioca, rice flour, minor ingredients and/or tapioca dextrin, high amylose corn starch, cross-linked potato starch, acid converted corn starch. In order to keep the non-gelatinized starches from settling sometimes xanthan, guar or other gums are added. US patent 3,751,268 describes a batter, that essentially consists of water and an unmodified, ungelatinized high amylose corn starch. US 4,504,509 describes a liquid batter of crosslinked high amylose starch. In general the high amylose starch in these patents is applied in order to further enhance the textural characteristics as compared to a batter in which it is omitted. Although many high amylose starches are known only the varieties on corn are commercially available. The application of high amylose corn starches has certain distinct disadvantages: the pricing is high, it has a distinct grainy off-taste which is a particular draw back when applied on a potato product and the availability is rather limited.

It is a goal of the present invention to provide for a starch based food coating or a batter that does not have the above described disadvantages. It is a further goal of the invention to provide a method for the preparation of a starch based coating for food that is independent of the source of starch. It is a further goal of the invention to provide for food products having improved textural characteristics. Other goals of the invention will become clear from the following description of the invention and a number of its specific embodiments.

It has presently been found that when a specifically treated starch is used that is cross-linked, degraded and non-gelatinized, a food coating can be prepared that meets the above defined criteria and provides for the desired texture of the resulting coating.

In one aspect the invention pertains to a food coating or batter composition comprising degraded, cross-linked non-gelatinized starch. These food coatings are capable of sustaining a crispy texture and prevent the product coated with the food coating according to the invention from becoming soggy. Furthermore a food coating according to the invention exerts an essentially neutral taste on the product to which the coating is applied. This is especially advantageous on products of which the taste is significantly different from the origin of the starch such as is the case with for example fish with a coating based on corn starch or on potatoes with a coating based on corn. The degraded, cross-linked non-gelatinized starch according to the invention is also advantageously used in the (partial) replacement of conventional high amylose starches which have previously been used in this type of food coating.

A combination of degradation and cross-linking of starch in relation to food products is known. The application of pre-gelatinized degraded cross-linked starches in gelled food-stuffs has been disclosed in for instance in US Patent 4,228,199. For the coating of foodstuffs, however, this type of product has never been described or contemplated.

In another aspect the invention pertains to a method for the production of a preparation for a starch-based food coating or batter composition comprising the steps of degrading the starch and cross-linking the starch.

The degradation of starch generally encompasses the reduction of both molecular weight and viscosity of the starch. A number of ways and reagents are known to reduce molecular weight and viscosity. These methods involve dry roasting, dextrinisation, phosphorylation at elevated temperature, enzymatic conversion, acid hydrolysis or oxidation in solution, etc. For granular products in general acid degradation, enzymatic hydrolysis or oxidation are preferred. For acid degradation hydrogen chloride and sulphuric acid are the acids of choice, although other acids can be used. The oxidation of starch can be accomplished with a large number of agents such as ozone, potassium permanganate, hydrogen peroxide (with or without a catalyst) and sodium hypochlorite. The sodium hypochlorite oxidation of starch is preferred. For enzymatic degradation α-amylase, β-amylase, isoamylase, pullulanase, or glycosyltransferases may be employed. (For a review see Modified starches: properties and uses; O.B. Wurzburg, CRC Press, Boca Raton 1987, Chapter 2).

A preferred degradation method comprises oxidation using a hypochlorite, preferably an alkali metal hypochlorite such as sodium hypochlorite. Typically, this method involves 1 to 45 grams of active chlorine per kilogram of starch. It is preferred that between 5 and 30 grams of active chlorine per kilogram starch is used.

In another preferred embodiment, the degradation is carried out using a strong acid, preferably a mineral acid such as hydrochloric acid or sulfuric acid. Both acids give essentially the same results, with minor differences in process conditions. The type of acid, the concentration of the acid, the temperature, the concentration of the starch, and the reaction time will vary depending on the desired properties of the product (see Modified starches: properties and uses; O.B. Wurzburg, CRC Press, Boca Raton 1987, page 19 et seq). The acid is preferably used in an amount to obtain a reaction mixture having a pH of three or lower. The conditions during the reaction will typically comprise a temperature of 0-65°C, preferably 35-55°C, more preferably 30-50°C.

Cross-linking of starch is also considered as a well known reaction. A wide variety of reagents are known that can render the starch polymer into a network. In general these bi-, tri-, or multifunctional reagents are capable of reacting with the hydroxylic functions of the starch. The cross-linking can be achieved by esterification or etherification. Among the reagents are adipic anhydride, acrolein, epichlorohydrin, phosphorous oxychloride, sodium trimetaphosphate, cyanuric acid chloride, formaldehyde, dimethylol urea, and divinyl sulphone. For the food market, the mixed acetic adipic anhydride, phosphorous oxychloride and sodium trimetaphosphate are significant. A special way of cross-linking is physical modification. This can be accomplished by heating at higher moisture contents or by heating at elevated pH and temperature and low moisture content which is described in for instance WO 96/04135. It is also possible to crosslink the starch by means of applying certain physical means, such as heating the starch under humid conditions (annealing), and the like.

Preferred is to carry out the crosslinking using agents that yield distarch phosphates, such as sodium trimetaphosphate (STMP) and phosphorous oxytrichloride. The extent of crosslinking will be based on regulations of food legislation in the specific countries that the product is intended for. The phosphate content of the product should not exceed 0.4 wt.%, based on the weight of the product.

In a method according to the present invention the order of the reactions, degradation/crosslinking or crosslinking/degradation, is of minor importance.

In the present invention the degraded crosslinked starch may be derived from maize, barley, wheat, rice, triticale, millet, tapioca, arrrow root, banana, potato, sweet potato, etc. or from high amylose starches like amylomaize, mung bean starch pea starches, high amylose potato starch, etc. These high amylose starches may be derived from plants that preferentially produce amylose through natural processes or by genetically modifying plants. It is to be noted that, although it is in principal possible to use a high amylose starch to base a food coating or batter composition therefor in accordance with the invention on, it is also possible to use different types of starches and to thereby substitute the high amylose starches with other more accessible types of starch.

It will be appreciated that it is possible to use a slightly modified starch to prepare the degraded crosslinked starch from (e.g. esterified or etherfied to a DS <0.02). It is well known to the artesian that a slight modification has little or no effect on the properties of starch. Suitable derivatives include esters such as acetates, succinates, adipates, and octenylsuccinates, prepared by reaction with corresponding anhydrides or vinyl esters. Other esters are phosphates prepared by reaction with orthophosphates or polyphosphates. Ethers include hydroxypropylethers prepared by the reaction of starch with propylene oxide.

In another aspect the invention pertains to the use of degraded, cross-linked non-gelatinized starch for improving textural characteristics of coatings for food. It has been found that particularly the crispiness of a food coating based on a degraded, crosslinked non-gelatinized starch is very good and also stays of good quality over a prolonged period of time. The regularly holding time for fried or oven treated coated food of five minutes can be extended to over fifteen minutes.

In food services, different types of prepared hot food stuffs are placed under a heating lamp in order to keep them warm. The use of a coating or batter composition according to the invention in combination with the heating lamp can significantly extend the crispiness, and thus the holding time (thirty minutes or even longer), of the food stuffs. Another way of obtaining food with a longer holding time, in particular with respect to French fries, is the traditional way of increasing the dry substance content. In that way, a thicker dry surface is created which avoids food (French fries) from becoming tough after frying or oven treatment. However, products treated in this manner are not really crispy.

A food coating according to the present invention can be used in and/or on a wide variety of foods. Preferred foods are meat, fish, potato products, such as French fries, snacks and vegetables but also vegetarian products such as soy-based products as tofu or tempeh can be coated with the batter according to the invention.

A food coating according to the invention may be prepared from any conventional batter composition to which degraded, cross-linked non-gelatinized starch is added. A typical batter composition of which a coating for the above foods may be prepared comprises water, flour (wheat flour, rice flour), modified starch (e.g. pre-gelatinized starch, crosslinked acetylated starch and the like), phosphates, baking powder, spices, proteins, various salts and other minor additives. Examples of such additives include gums, such as xanthan gum, guar gum, and locust bean gum. The amounts in which these ingredients are used, will depend on the specific application and the food product to be coated. The chosen combination of ingredients determines the properties of the coating. Examples of such properties include adherence to the surface of the food product, binding to the food stuff, texture properties, appearance (visibility / invisibility).

The above described batter composition may be applied to a food product to be provided with a food coating according to the invention in any conventional way, such as applying the batter composition to the food product by dipping, spraying, encapsulating and the like.

After provision with the batter composition, the products to be provided with a coating according to the invention can be prepared in any conventional way such as deep frying, steaming or baking (e.g. in a pan or an oven) but also more convenience based cooking techniques can be employed such as those involving microwave or infrared ovens.

It will be understood that the invention also pertains to a food product coated with a food coating or batter according to the invention and to a method for the manufacture of a food product of increased crispiness comprising a step wherein a coating comprising a degraded, cross-linked non-gelatinized starch is applied to the food product.

### Examples

### Experimental part

- Sensoric evaluation: The coated foods were tested by an expert panel in sensory attributes. The products were evaluated and ranked. The attributes are expressed as the sum of the ranking on the total of the panel.
- Viscosity: The viscosity was measured using a Postumus flow cup
- Pick up: The pick-up of a coating is determined by weighing a sample of French fries after and before coating. The pick-up is expressed as the percentage weight increase.

### Example I

### The preparation of acid degraded crosslinked potato starch:

A 39 % starch slurry is prepared of 1 kg of potato starch and water. To this slurry 50 mL of 10 N sulfuric acid are added. The temperature was raised to 45 °C. The reaction is allowed to proceed for 17 hours. The slurry is neutralized with sodium hydroxide to pH 5-6 and washed.

The resulting starch is resuspended in water to a 39 % suspension. To this slurry 25 g of sodium chloride and 170.5 g of a 4.4 % (w/w) sodium hydroxide solution are added. The temperature is set to 35 °C and 1.5 g of sodium trimetaphosphate are added. The reaction is allowed to proceed for 6 hours. The slurry is neutralized with sulfuric acid to pH 5-6 and washed and dried using conventional methods known to the art.

### Preparation of coated oven French fries

10 kg of potatoes were peeled in a carbon peeler. The potatoes were cut in pieces of similar length and a height and breadth of 10 mm in a snit of 10x10 mm. The resulting pieces were blanched for 8 minutes at 80 °C. Pieces were selected with similar size. They were dried in a cabinet at 70 °C at 20 % RH until a drying loss of 24 % was attained. The dried strips were divided into portions of 200 g and coated (see below). The coated strips were parfried for 2 minutes at 180 °C. The products were frozen at -25 °C packaged and stored at - 25 °C for 1 day or longer.

### The coating of French fries

A mixture was prepared of 173 g of Perfectamyl FFC (crosslinked starch of AVEBE), 67 g of AVEDEX W-90 (white dextrin of AVEBE), Rice flour BL100 (Silvo, Papendrecht), 67 g of degraded crosslinked potato starch, 12 g of salt and 14 g of Paselli P (pre-gelatinized crosslinked starch of AVEBE) in a mixing bowl. Trough this mixture 600 g of water was mixed with moderate stirring. After 1.5 hr this mixture was stirred for 10 minutes. The coating is poured over 200 g of French fry strips as previously prepared. The excess coating is discarded by dripping and venting air.

### Oven preparation of French fries

Frozen samples are taken and placed in a small pre-heated kitchen oven at 225 °C. The products are baked for 12 minutes. After cooling for 5 min. at room temperature the products are judged.

### Comparative Example I

### Coating without degraded crosslinked starch

A second coating was prepared with 67 g of Perfectamyl FFC instead of 67 g of degraded, cross-linked non-gelatinized starch. The coating was applied to French fries, which were processed as previously described.

The results are summarized in table 1. It can be concluded that the addition of degraded crosslinked potato improves the crispiness of the French fry.

**Table 1**

| | | Example I | Comparative Example I |
|---|---|---|---|
| Coating composition | | | |
| | AVEDEX W90 | 67 g | 67 g |
| | Rice flour | 67 g | 67 g |
| | Salt | 12 g | 12 g |
| | Perfectamyl FFC | 173 g | 240 g |
| | Degraded crosslinked product | 67 g | |
| Viscosity | | 36.5 sec | 34 sec |
| Pick up | | 28.4 % | 32.2 % |
| Crispiness | | 26 | 7 |

### Example II

### The coating of fish

40 g of degraded crosslinked potato starch is mixed with a battermix (consisting of wheat flour, baking soda, spices and salt) and water until a viscous batter is obtained. A deep frozen piece of fish is dipped into the batter ensuring complete cover of the fish with batter. Any excess batter is removed. The fish is covered with breadcrumb. Subsequently the fish is parfried for 1 min at 180 °C. The fish is left to cool and transferred to a bag and sealed. The bag is stored for 1 day at 20 °C. The fish is cooked in an oven for 45-50 min at 180 °C. After cooking the fish is evaluated

The fish had a very crispy texture in conjunction with a nice coloration of the batter. The adhesion of the batter was somewhat uneven.

### Example III

### Coating with adhesive properties

Example II was repeated with a mixture of 30 g of degraded crosslinked starch and 10 g of Perfectabind M20 (acetylated distarch phosphate of AVEBE) instead of the degraded crosslinked starch alone.

The batter had an excellent adherence to the surface of the fish. The crispiness was good.

## Claims

1. Food coating or batter composition comprising degraded, cross-linked non-gelatinized starch.

2. Food coating according to claim 1, wherein the starch is degraded using hypochlorite or a strong acid.

3. Food coating according to claim 1 or 2, wherein the starch is cross-linked to yield a distarch phosphate.

4. Food coating according to claims 1-3, wherein starch is derived from potato, tapioca, wheat, corn or a mixture thereof.

5. Food coating or batter composition according to any of the preceding claims, further comprising one or more of wheat flour, rice flour, salt, a phosphate, baking powder, a spice, a protein, a modified starch.

6. Method for the preparation of a starch-based food coating or batter composition comprising the steps of degrading the starch and cross-linking the starch.

7. Method according to claim 6, wherein the starch is degraded using a strong acid or a hypochlorite.

8. Method according to claim 6 or 7, wherein the cross-linking of starch is achieved with metaphosphate or phosphorous oxychloride or by physical means.

9. Use of degraded, cross-linked non-gelatinized starch for improving textural characteristics of coatings for food.

10. Use according to claim 9 wherein one of the textural characteristics is an increased crispiness.

11. Use of degraded, cross-linked non-gelatinized starch as a substitute for high amylose starch in coatings for food.

12. Food product coated with a food coating or batter composition according to claim 1.

13. Method for the manufacture of a food product of increased crispiness comprising a step wherein a coating comprising a degraded, cross-linked non-gelatinized starch is applied to the food product.

14. Method according to claim 13, wherein the food product is prepared by deep-frying, baking or heating.
